# FASCICULE DE BREVET EUROPEEN

(11) **EP 1 998 656 B1**
(45) Date de publication et mention de la délivrance du brevet: **21.10.2009**
(21) Numéro de dépôt: 07731103.3
(22) Date de dépôt: 07.03.2007
(51) Int. Cl.: A47J 43/07

(54) **APPAREIL DE PREPARATION CULINAIRE MUNI D'UN DISPOSITITIF DE SECURITE**
KOCHZUBEREITUNGSGERÄT MIT SICHERHEITSVORRICHTUNG
CULINARY PREPARATION APPLIANCE WITH SAFETY DEVICE

(30) Priorité: 29.03.2006 FR 0602717
(43) Date de publication de la demande: 10.12.2008
(73) Titulaire: SEB SA, 69130 Ecully (FR)
(72) Inventeur: RENAUDIN, Florent, 53810 Change (FR); LEMARIE, Christophe, 53470 Martigne sur Mayenne (FR)
(74) Mandataire: Kiehl, Hubert
(86) Numéro de dépôt international: PCT/FR2007/000405
(87) Numéro de publication internationale: WO 2007/110493

(56) Documents cités:
- DE-A1- 19 912 750

## Description

La présente invention se rapporte au domaine technique général des appareils électroménagers de préparation culinaire et concerne plus particulièrement un appareil comportant un dispositif de sécurité empêchant le fonctionnement du moteur lorsqu'un élément, tel le récipient ou le couvercle, n'est pas correctement monté.

Il est connu, de la demande de brevet US 6 629 492, un appareil de préparation culinaire comportant un dispositif de sécurité empêchant le fonctionnement du moteur lorsque le récipient et le couvercle ne sont pas correctement placés sur la base. Cependant, un tel dispositif de sécurité, utilisant un interrupteur à lames souples ainsi qu'un aimant pour détecter la présence du couvercle, présente l'inconvénient d'être relativement coûteux. Un autre document représentant l'art intérieur est DE 199 12 750 A1.

Aussi, un but de la présente invention est de proposer un dispositif de sécurité présentant l'avantage d'être simple et économique à réaliser.

A cet effet, l'invention se rapporte à un appareil électroménager de préparation culinaire comportant un boîtier renfermant un moteur électrique pour l'entraînement d'un outil de travail à l'intérieur d'un récipient, le moteur étant commandé par un circuit d'alimentation muni d'un dispositif de sécurité empêchant le fonctionnement du moteur lorsqu'un premier élément, tel le boîtier, n'est pas correctement monté par rapport à un second élément amovible, tel le récipient, caractérisé en ce que ledit dispositif de sécurité comprend un organe conducteur porté par le second élément et établissant une conduction électrique directe entre au moins deux contacts portés par le premier élément lorsque le second élément est correctement monté sur le premier élément.

Selon une autre caractéristique de l'invention, l'organe conducteur est constitué par une piste conductrice s'étendant sur la face du second élément venant au contact du premier élément.

Selon une autre caractéristique de l'invention, le second élément est assemblé par rotation sur le premier élément et la piste conductrice s'étend sensiblement suivant un arc de cercle.

Selon une autre caractéristique de l'invention, le moteur est alimenté en très basse tension de sécurité.

Par très basse tension de sécurité, on entend une tension qui ne dépasse pas 50 volts en courant alternatif ou 75 volts en courant continu de sorte que ces tensions ne peuvent pas produire dans le corps humain des courants électriques dangereux pour l'homme.

Selon encore une autre caractéristique de l'invention, le moteur est un moteur à courant continu.

Selon encore une autre caractéristique de l'invention, lors du désaccouplement du second élément par rapport au premier élément, l'organe conducteur du récipient vient établir une conduction électrique entre l'un des deux contacts du premier élément et un troisième contact porté par le premier élément de manière à mettre le moteur en court-circuit et freiner la rotation de l'outil.de travail.

Selon une autre caractéristique de l'invention, l'organe conducteur est porté par le récipient et les contacts sont portés par le boîtier.

Selon une autre caractéristique de l'invention, l'organe conducteur établit une connexion électrique directe entre deux contacts montés en série sur le circuit d'alimentation du moteur, l'organe conducteur étant parcouru par le courant d'alimentation du moteur lorsque ce dernier est en fonctionnement.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- les figures 1 et 2 sont des vues en perspective d'un appareil de préparation culinaire selon un mode particulier de réalisation de l'invention, le récipient étant désaccouplé du boîtier.
- la figure 3 est une vue de dessous du récipient de l'appareil des figures 1 et 2,
- la figure 4 est une vue de dessus du boîtier de l'appareil des figures 1 et 2,
- la figure 5 est une représentation schématique du circuit d'alimentation du moteur de l'appareil des figures 1 et 2,
- la figure 6 est une vue de dessus du récipient assemblé sur le boîtier,
- la figure 7 est une vue de dessus du récipient en cours de rotation pour son désaccouplement du boîtier.

Seuls les éléments nécessaires à la compréhension de l'invention ont été représentés. Pour faciliter la lecture des dessins les mêmes éléments portent les mêmes références d'une figure à l'autre.

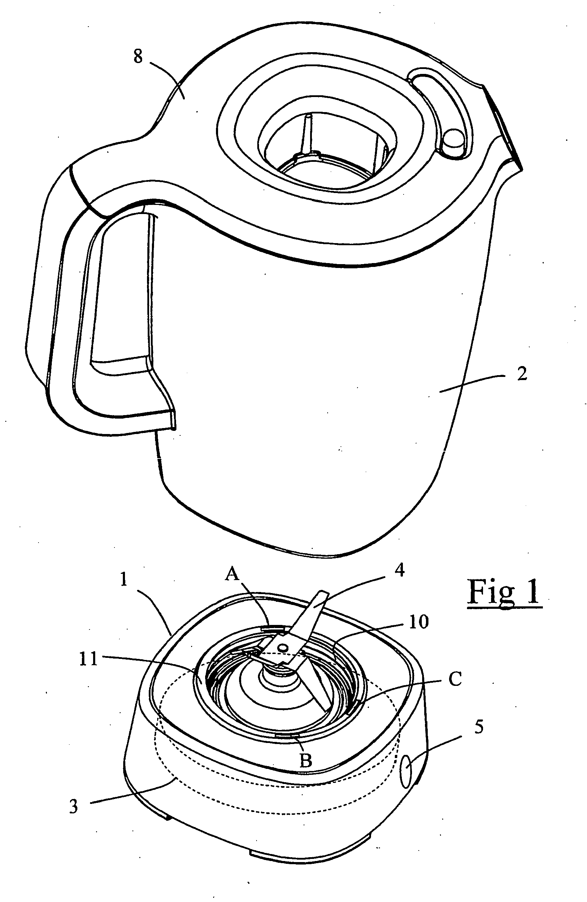

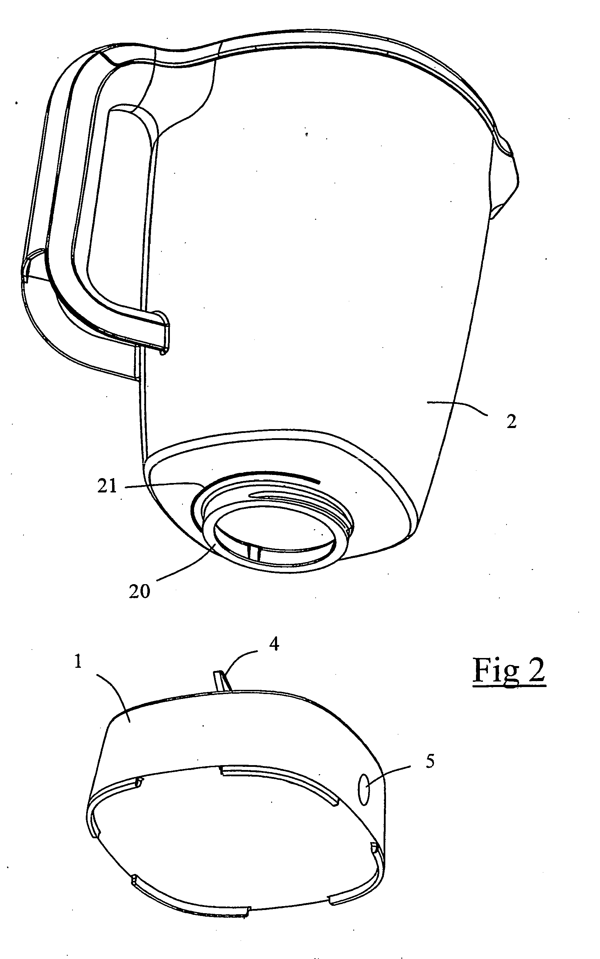

Les figures 1 et 2 illustrent un appareil de préparation culinaire comportant un boîtier 1 destiné à s'accoupler avec un récipient 2 fermé par un couvercle 8.

Le boîtier 1 renferme un moteur 3, représenté en pointillée sur la figure 1, dont l'arbre de sortie est solitaire d'un outil coupant 4 prévu pour traiter les aliments situés au fond du récipient 2. De manière avantageuse, le moteur 3 est un moteur à tension continu alimenté en très basse tension de sécurité, de l'ordre de 42 Volts, par un cordon relié à une alimentation, non représenté sur les figures. Le boîtier 1 est muni classiquement d'un bouton 5 associé à un interrupteur permettant la mise en marche ou l'arrêt du moteur 3.

Afin de permettre la fixation du récipient 2 sur le boîtier 1, ce dernier est muni d'une bague filetée 10 s'accouplant avec un manchon 20 disposé à la base du récipient 2, le manchon 20 étant muni d'un filetage de sorte que le récipient 2 se fixe sur le boîtier 1 par rotation d'un quart de tour.

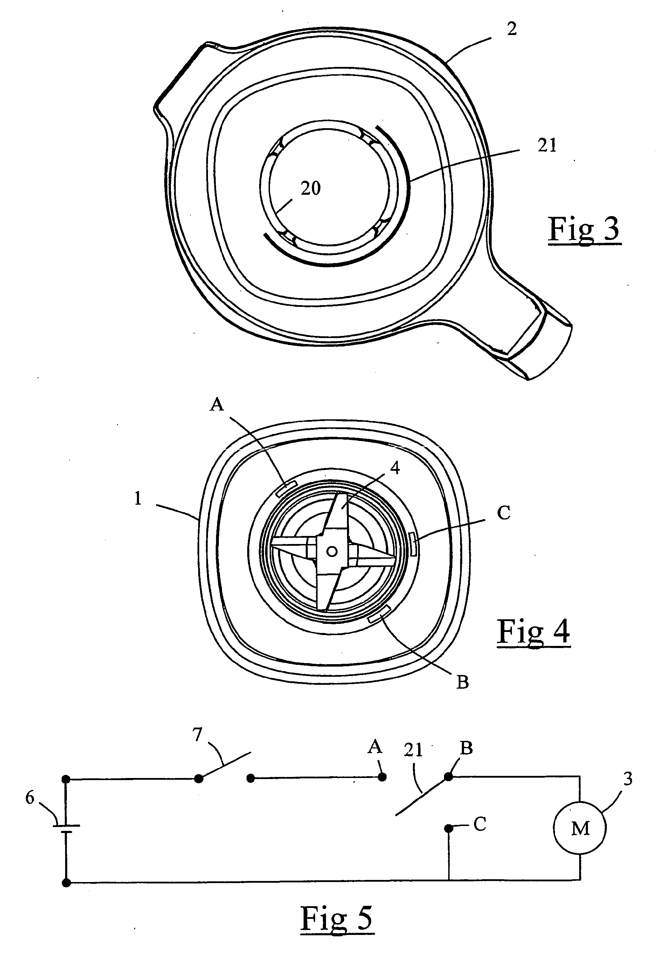

Plus particulièrement selon l'invention, et conformément aux figures 2 et 3, la face inférieure du récipient 2 comporte une piste conductrice 21, réalisée par exemple en cuivre, s'étendant avantageusement autour du manchon 20 suivant un arc de cercle sur un peu plus de 180°. De manière avantageuse, le récipient 2 est en matière plastique et la piste conductrice 21 est réalisée par l'insertion d'un organe conducteur lors du moulage du récipient.

Conformément à la figure 4, la face supérieure du boîtier comporte des contacts A, B, C disposés sur une couronne circulaire 11 venant en regard de la surface balayée par la piste conductrice 21 lorsque le récipient 2 est monté sur le boîtier 1.

Ces contacts comprennent un premier contact A et un deuxième contact B disposés sensiblement à 180° l'un de l'autre ainsi qu'un troisième contact C disposé sensiblement à 45° du second contact B.

Ces contacts A,B,C appartiennent à un circuit d'alimentation du moteur 3, représenté schématiquement sur la figure 5.

Conformément à cette figure, le circuit d'alimentation comprend en série: une alimentation 6, un interrupteur 7 associé au bouton 5 de mise en marche de l'appareil, les contacts A,B et le moteur 3.

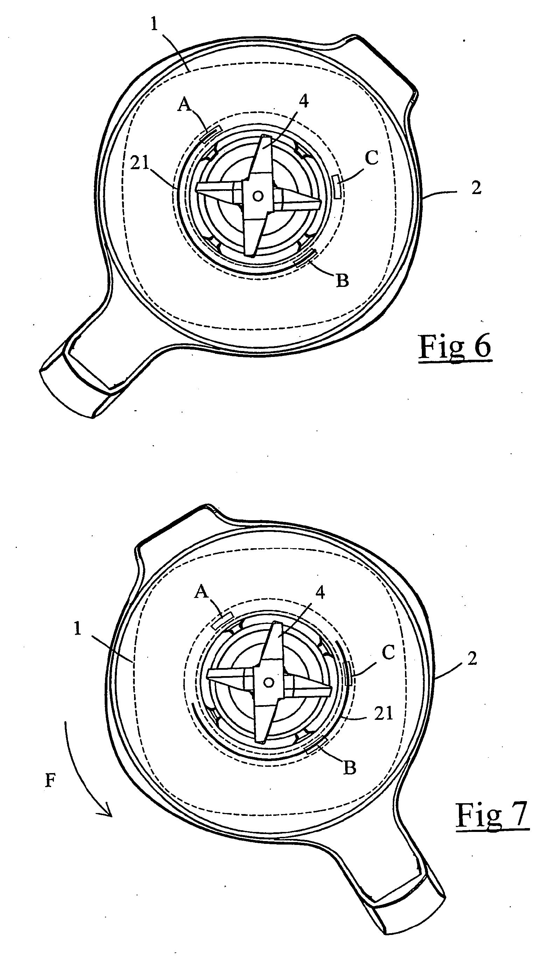

Les contacts A,B de connexion coopèrent avec la piste conductrice 21 du récipient pour former un interrupteur qui est fermé lorsque le récipient 2 est correctement vissé sur le boîtier 1 ainsi que cela est représenté sur la figure 6, la piste conductrice 21 établissant alors une conduction électrique directe entre les contacts A et B. Dans ce cas, la fermeture de l'interrupteur 7 par une pression sur le bouton 5 provoque la mise en marche du moteur 3 et donc la mise en rotation de l'outil de travail dans le récipient 2.

Lorsque le récipient 2 est dévissé d'un quart de tour du boîtier 1 pour son désaccouplement, la piste conductrice 21 est déplacée en rotation de sorte que son extrémité arrière n'est plus en contact avec le contact A, ce qui coupe l'alimentation du moteur 3. De plus, comme cela est illustré sur la figure 7, la rotation du récipient 2 d'un quart de tour selon le sens de la flèche F amène l'extrémité opposée de la piste conductrice 21 à venir en contact avec le contact C du boîtier 1 de sorte que la piste conductrice 21 établit alors momentanément une conduction électrique entre les contacts B et C, ce qui court-circuite le moteur 3 et provoque son blocage et donc l'arrêt immédiat de la rotation de l'outil coupant 4.

Une telle caractéristique permet ainsi de créer un frein d'outil qui supprime tout risque de rotation résiduelle de l'outil coupant 4, et donc de blessure, lorsque l'utilisateur désaccouple rapidement le récipient 2 du boîtier 1.

Lorsque le récipient 2 est désaccouplé du boîtier 1, la piste conductrice 21 n'établit plus de conduction électrique entre les contacts A et B, ce qui ouvre le circuit d'alimentation du moteur 3 et empêche le fonctionnement de ce dernier même si l'utilisateur appuie sur le bouton 5 pour fermer l'interrupteur 7.

Un tel appareil présente donc l'avantage de posséder un dispositif de sécurité simple, fiable et peu coûteux à réaliser.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation de l'invention, le moteur pourra être un moteur à courant alternatif.

Ainsi, dans une autre variante de réalisation, les contacts pourront être portés par le récipient et l'élément conducteur sera porté par le couvercle de manière à ne permettre le fonctionnement du moteur que lorsque le couvercle est correctement placé sur le récipient.

## Revendications

1. Appareil électroménager de préparation culinaire comportant un boîtier (1) renfermant un moteur (3) électrique pour l'entraînement d'un outil de travail (4) à l'intérieur d'un récipient (2), ledit moteur (3) étant commandé par un circuit d'alimentation muni d'un dispositif de sécurité empêchant le fonctionnement du moteur lorsqu'un premier élément, tel le boîtier (1), n'est pas correctement monté par rapport à un second élément amovible, tel le récipient (2), **caractérisé en ce que** ledit dispositif de sécurité comprend un organe conducteur (21) porté par le second élément et établissant une conduction électrique directe entre au moins deux contacts (A, B) portés par le premier élément lorsque le second élément est correctement monté sur le premier élément.

2. Appareil électroménager selon la revendication 1, **caractérisé en ce que** ledit organe conducteur est constitué par une piste conductrice (21) s'étendant sur la face du second élément venant au contact du premier élément.

3. Appareil électroménager selon la revendication 2, **caractérisé en ce que** le second élément est assemblé par rotation sur le premier élément et **en ce que** la piste conductrice (21) s'étend sensiblement suivant un arc de cercle.

4. Appareil électroménager selon l'une quelconque des revendications 1 à 3, **caractérisé en ce que** le moteur (3) est alimenté en très basse tension de sécurité.

5. Appareil électroménager selon la revendication 4, **caractérisé en ce que** le moteur (3) est un moteur à courant continu.

6. Appareil électroménager selon la revendication 5, **caractérisé en ce que**, lors du désaccouplement du second élément par rapport au premier élément, l'organe conducteur (21) du récipient vient établir une conduction électrique entre l'un des deux contacts (A, B) du premier élément et un troisième contact (C) porté par le premier élément de manière à mettre le moteur en court-circuit et freiner la rotation de l'outil de travail (4).

7. Appareil électroménager selon l'une quelconque des revendications 1 à 6, **caractérisé en ce que** ledit organe conducteur (21) est porté par le récipient (2) et **en ce que** lesdits contacts (A, B) sont portés par le boîtier (1).

8. Appareil électroménager selon l'une quelconque des revendications 1 à 7, **caractérisé en ce que** ledit organe conducteur (21) établit une connexion électrique directe entre deux contacts (A, B) montés en série sur le circuit d'alimentation du moteur (3), ledit organe conducteur (21) étant parcouru par le courant d'alimentation du moteur (3) lorsque ce dernier est en fonctionnement.

## Claims

1. Electrical household appliance for food preparation comprising a housing (1) enclosing an electrical motor (3) for the driving of a working tool (4) inside a recipient (2), said motor (3) being controlled by a supply circuit provided with a safety device preventing the operation of the motor when a first element, such as the housing (1), is not correctly mounted in relation to a second removable element, such as the recipient (2), **characterised in that** said safety device includes a conducting member (21) carried by the second element and establishing a direct electric conduction between at least two contacts (A, B) carried by the first element when the second element is correctly mounted on the first element.

2. Electrical household appliance according to claim 1, **characterised in that** said conducting member is comprised of a conductive track (21) extending over the face of the second element coming into contact with the first element.

3. Electrical household appliance according to claim 2, **characterised in that** the second element is assembled by rotation onto the first element and **in that** the conductive track (21) extends substantially following the arc of a circle.

4. Electrical household appliance according to any of claims 1 to 3, **characterised in that** the motor (3) is powered with very low safety voltage.

5. Electrical household appliance according to claim 4, **characterised in that** the motor (3) is a direct current motor.

6. Electrical household appliance according to claim 5, **characterised in that**, during the uncoupling of the second element in relation to the first element, the conducting member (21) of the recipient establishes an electric conduction between one of the two contacts (A, B) of the first element and a third contact (C) carried by the first element in such a way as to short-circuit the motor and brake the rotation of the working tool (4).

7. Electrical household appliance according to any of claims 1 to 6, **characterised in that** said conducting member (21) is carried by the recipient (2) and **in that** said contacts (A, B) are carried by the housing (1).

8. Electrical household appliance according to any of claims 1 to 7, **characterised in that** said conducting member (21) establishes a direct electric connection between two contacts (A, B) mounted in series on the supply circuit of the motor (3), with the feed current of the motor (3) flowing through said conducting member (21) when the motor is operating.

## Patentansprüche

1. Elektrohaushaltsgerät für kulinarische Zubereitungen, umfassend ein Gehäuse (1), das einen Elektromotor (3) für den Antrieb eines Arbeitswerkzeuges (4) im Inneren eines Behälters (2) einschließt, wobei der Motor (3) von einem Versorgungsstromkreis gesteuert wird, der mit einer Sicherheitseinrichtung versehen ist, die den Betrieb des Motors verhindert, sobald ein erstes Element, wie etwa das Gehäuse (1), in Bezug auf ein zweites abnehmbares Element, wie etwa der Behälter (2), nicht korrekt montiert ist, **dadurch gekennzeichnet, dass** die Sicherheitseinrichtung ein leitendes Teil (21) umfasst, das vom zweiten Element getragen wird und das eine direkte elektrische Leitung zwischen mindestens zwei Kontakten (A, B), die vom ersten Element getragen werden, herstellt, sobald das zweite Element korrekt auf dem ersten Element montiert ist.

2. Elektrohaushaltsgerät nach Anspruch 1, **dadurch gekennzeichnet, dass** das leitende Teil von einer Leiterbahn (21) gebildet wird, die sich auf jener Seite des zweiten Elements erstreckt, die mit dem ersten Element in Kontakt kommt.

3. Elektrohaushaltsgerät nach Anspruch 2, **dadurch gekennzeichnet, dass** das zweite Element durch Drehen auf dem ersten Element befestigt wird und **dadurch**, dass sich die Leiterbahn (21) im Wesentlichen gemäß einem Kreisbogen erstreckt.

4. Elektrohaushaltsgerät nach einem der Ansprüche 1 bis 3, **dadurch gekennzeichnet, dass** der Motor (3) mit sehr niedriger Sicherheitsspannung gespeist wird.

5. Elektrohaushaltsgerät nach Anspruch 4, **dadurch gekennzeichnet, dass** der Motor (3) ein Gleichstrommotor ist.

6. Elektrohaushaltsgerät nach Anspruch 5, **dadurch gekennzeichnet, dass** beim Entkoppeln des zweiten Elements in Bezug auf das erste Element das leitende Teil (21) des Behälters eine elektrische Leitung zwischen einem der beiden Kontakte (A, B) des ersten Elements und einem dritten Kontakt (C), der vom ersten Element getragen wird, herstellt, sodass der Motor kurzgeschlossen und die Drehung des Arbeitswerkzeuges (4) gebremst wird.

7. Elektrohaushaltsgerät nach einem der Ansprüche 1 bis 6, **dadurch gekennzeichnet, dass** das leitende Teil (21) vom Behälter (2) getragen wird und **dadurch**, dass die Kontakte (A, B) vom Gehäuse (1) getragen werden.

8. Elektrohaushaltsgerät nach einem der Ansprüche 1 bis 7, **dadurch gekennzeichnet, dass** das leitende Teil (21) eine direkte elektrische Verbindung zwischen zwei Kontakten (A, B) herstellt, die im Versorgungsstromkreis des Motors (3) in Serie geschaltet sind, wobei das leitende Teil (21) vom Versorgungsstrom des Motors (3) durchflossen wird, sobald Letzterer in Betrieb ist.
